# EUROPÄISCHE PATENTANMELDUNG

(11) **EP 3 026 237 A1**
(43) Veröffentlichungstag der Anmeldung: **01.06.2016**
(21) Anmeldenummer: 15002789.4
(22) Anmeldetag: 29.09.2015
(51) Int. Cl.: F02B 37/10, F02B 37/14, F02B 39/10, F02D 41/10, F02D 41/00

(54) **VERFAHREN UND VORRICHTUNG ZUM BETRIEB EINES ELEKTROMOTORISCH UNTERSTÜTZTEN ABGASTURBOLADERS EINES KRAFTFAHRZEUGS**

(30) Priorität: 28.11.2014 DE 102014017631
(71) Anmelder: MAN Truck & Bus AG, 80995 München (DE)
(72) Erfinder: PAPPENHEIMER, Andreas, 90408 Nürnberg (DE); SOMMERMANN, Andreas, 91560 Heilsbronn (DE)

(57) **Zusammenfassung**

Die Erfindung betrifft ein Verfahren und eine Vorrichtung zum Betrieb eines elektromotorisch unterstützten Abgasturboladers eines Kraftfahrzeugs. Die Vorrichtung umfasst einen Abgasturbolader (10) mit einer motorisch und generatorisch betreibbaren ersten elektrischen Maschine (14) zum Antrieb bzw. zur Antriebsunterstützung des Abgasturboladers. Die Vorrichtung umfasst ferner ein Niederspannungsbordnetz, in dem eine motorisch und generatorisch betreibbare zweite elektrische Maschine (3), die drehmomentübertragend mit der Kurbelwelle koppelbar bzw. gekoppelt ist, und ein elektrischer Energiespeicher (5) zur Versorgung der im Niederspannungsbordnetz angeordneten elektrischen Verbraucher vorgesehen sind. Die Vorrichtung umfasst ferner eine Steuereinrichtung (1), die eingerichtet ist, in einem ersten Betriebsmodus (S3) die erste elektrische Maschine (14) des Abgasturboladers (10) anzusteuern, um den Abgasturbolader (10) elektromotorisch unterstützt anzutreiben, und in einem zweiten Betriebsmodus (S4) die erste elektrische Maschine (14) anzusteuern, um elektrische Energie aus der Abgasenergie über einen generatorischen Betrieb zu rekuperieren. Die Steuereinrichtung (1) ist eingerichtet, im ersten Betriebsmodus (S3) dem Abgasturbolader (10) elektrische Energie aus dem Niederspannungsbordnetz des Kraftfahrzeugs zuzuführen und im zweiten Betriebsmodus die von dem Abgasturbolader (10) rekuperierte elektrische Energie ohne vorherige Zwischenspeicherung in das Niederspannungsbordnetz einzuspeisen.

## Beschreibung

Die Erfindung betrifft ein Verfahren zum Betrieb eines elektromotorisch unterstützten Abgasturboladers nach dem Oberbegriff des Anspruchs 1. Die Erfindung betrifft ferner eine Vorrichtung zum Betrieb eines elektromotorisch unterstützten Abgasturboladers nach dem Oberbegriff des Anspruchs 8.

Aus der Praxis ist bekannt, dass ein Abgasturbolader als ein elektromotorisch unterstützter Abgasturbolader ausgeführt sein kann. Hierbei ist ein zusätzlicher Elektromotor zum Antrieb bzw. zur Antriebsunterstützung des Abgasturboladers vorgesehen, der drehmomentübertragend mit der Antriebswelle des Abgasturboladers koppelbar bzw. gekoppelt ist. Mit einem derartigen zusätzlichen Elektromotor kann der Aufladeprozess der Brennkraftmaschine temporär unterstützt werden. Der Grundgedanke bestand darin, den für das verzögerte Ansprechen verantwortlichen Hochlauf des Laufzeugs von der thermodynamischen Abhängigkeit zu entkoppeln und die Drehzahlsteigerung primär über den Elektromotor zu bewerkstelligen. Damit wäre die Turboladerdrehzahl weitgehend von der Kurbelwellendrehzahl unabhängig.

Weiterhin wurde in Zusammenhang mit hybridisierten Antriebssträngen vorgeschlagen, den Elektromotor des Abgasturboladers dazu zu nutzen, in Betriebszuständen mit ausreichend Abgasenergie einen Teil der Abgasenergie durch einen generatorischen Betrieb des Elektromotors zu rekuperieren und hierzu die rekuperierte Energie in dem elektrischen Hochvoltenergiespeicher zum elektromotorischen Antrieb des Fahrzeugs zu speichern. In dem Artikel "Hybridturbolader mit neuer Elektromotorentechnik" in der Ausgabe 3/2014 der Zeitschrift "MTZ - Motortechnische Zeitschrift", Seiten 50-55 wird ebenfalls vorgeschlagen, den Elektromotor des Abgasturboladers dazu zu nutzen, in Betriebszuständen mit ausreichend Abgasenergie einen Teil der Abgasenergie durch einen generatorischen Betrieb des Elektromotors zu rekuperieren und hierzu einen zusätzlichen elektrischen Energiespeicher bereitzustellen, um die rekuperierte Energie aufzunehmen. Ferner ist eine beispielhafte Realisierung eines motorisch und generatorisch betreibbaren Abgasturboladers beschrieben.

Nachteilig an den vorgenannten Ansätzen zur Energierekuperation mit Hilfe eines elektromotorisch unterstützen Abgasturboladers ist, dass diese jedoch nicht auf rein verbrennungsmotorisch angetriebene Kraftfahrzeuge anwendbar sind oder die Bereitstellung eines zusätzlichen Energiespeichers erfordern.

Es ist somit eine Aufgabe der Erfindung, ein verbessertes Verfahren und eine Vorrichtung zum Betrieb eines elektromotorisch unterstützten Abgasturboladers bereitzustellen, mit denen Nachteile herkömmlicher Techniken vermieden werden können. Die Aufgabe der Erfindung ist es insbesondere, ein Betriebsverfahren für einen elektromotorisch unterstützten Abgasturbolader bereitzustellen, mit dem in Betriebszuständen mit ausreichend Abgasenergie ein Teil der Abgasenergie durch einen generatorischen Betrieb des Elektromotors rekuperiert werden kann und welches auch bei rein verbrennungsmotorisch angetriebenen Kraftfahrzeugen , d. h. bei Fahrzeugen ohne hybridisierten Antriebsstrang, in einer einfacheren und kostensparenderen Gestaltung angewendet werden kann.

Diese Aufgaben werden durch ein Verfahren mit den Merkmalen des Hauptanspruchs gelöst. Diese Aufgaben werden ferner durch eine Vorrichtung mit den Merkmalen des nebengeordneten Anspruchs gelöst. Vorteilhafte Ausführungsformen und Anwendungen der Erfindung sind Gegenstand der abhängigen Ansprüche und werden in der folgenden Beschreibung unter teilweiser Bezugnahme auf die Figuren näher erläutert.

Erfindungsgemäß wird ein Verfahren zum Betrieb eines elektromotorisch unterstützten Abgasturboladers eines Kraftfahrzeugs, insbesondere Nutzfahrzeugs, vorgeschlagen, umfassend einen ersten Betriebsmodus, in dem der Abgasturbolader elektromotorisch unterstützt angetrieben wird, und einen zweiten Betriebsmodus, in dem der Abgasturbolader elektrische Energie aus der Abgasenergie rekuperiert. Das Kraftfahrzeug ist vorzugsweise ein verbrennungsmotorisch angetriebenes Kraftfahrzeug ohne Hybridantrieb oder ein Mildhybridfahrzeug, bei dem eine elektrische Maschine im Motorbetrieb den Verbrennungsmotor zur Leistungssteigerung und zur Verbrauchsreduzierung unterstützt und im Generatorbetrieb der elektrischen Maschine Bremsenergie teilweise wiedergewonnen werden kann.

Gemäß allgemeinen Gesichtspunkten der Erfindung wird im ersten Betriebsmodus dem Abgasturbolader elektrische Energie aus einem Niederspannungsbordnetz des Kraftfahrzeugs zugeführt und im zweiten Betriebsmodus die von dem Abgasturbolader rekuperierte elektrische Energie ohne vorherige Zwischenspeicherung in das Niederspannungsbordnetz eingespeist.

Die Erfindung umfasst also die allgemeine technische Lehre, dass das bestehende herkömmliche Niederspannungsbordnetz des Kraftfahrzeugs zur Bereitstellung der elektrischen Energie für den Abgasturbolader und zur Aufnahme der rekuperierten elektrischen Energie vom Abgasturbolader genutzt wird, so dass kein zusätzliches Hochspannungsnetz mit einem elektrischen Hochvoltspeicher oder sonstige zusätzliche elektrische Energiespeicher vonnöten sind. Unter einem Niederspannungsbordnetz, auch als Niedervolt- oder NV-Bordnetz bezeichnet, wird ein herkömmliches Kleinspannungsbordnetz eines Kraftfahrzeugs verstanden, das mit einer Nennspannung bis 60 V betrieben wird, beispielsweise mit einer Nennspannung von 12 V für Personenkraftwagen, 24 V für Nutzfahrzeuge oder 48 V für Elektro- oder Hybridfahrzeuge. Die teilweise Rekuperation der Abgasenergie mittels des elektromotorischen Antriebs des Abgasturboladers reduziert den Kraftstoffverbrauch und damit die CO2-Emission des Kraftfahrzeugs.

Eine Möglichkeit der erfindungsgemäßen Realisierung sieht vor, dass die von dem Abgasturbolader rekuperierte elektrische Energie einem im Niederspannungsbordnetz vorhandenen elektrischen Energiespeicher, über den die elektrischen Verbraucher des Niederspannungsbordnetzes versorgt werden und/oder versorgbar sind, zugeführt wird. Dieser elektrische Energiespeicher ist vorzugsweise die Starterbatterie. Dies bietet den Vorteil, dass kein zusätzlicher Energiespeicher zur Aufnahme der Rekuperationsenergie notwendig ist, sondern auf den bereits vorhandenen zurückgegriffen wird.

Ferner kann die von dem Abgasturbolader rekuperierte elektrische Energie einer im Niederspannungsbordnetz vorhandenen elektromotorisch und generatorisch betreibbaren elektrischen Maschine, die drehmomentübertragend mit der Kurbelwelle koppelbar bzw. gekoppelt ist, zugeführt werden, um die elektrische Maschine elektromotorisch zu betreiben. Dies kann beispielsweise die Lichtmaschine sein. Gemäß dieser Variante ist die Lichtmaschine somit so ausgeführt und so von einer Steuereinrichtung angesteuert, dass sie nicht nur in herkömmlicher Weise generatorisch von der Brennkraftmaschine angetrieben, sondern auch elektromotorisch betrieben werden kann. Gemäß einer weiteren Variante kann die elektromotorisch und generatorisch betreibbare elektrische Maschine ein Kurbelwellenstartergenerator sein.

Eine Möglichkeit der erfindungsgemäßen Realisierung sieht vor, dass in einem Volllast- oder Hochlastbetrieb einer Brennkraftmaschine des Kraftfahrzeugs der Abgasturbolader im zweiten Betriebsmodus betrieben wird und die elektrische Maschine, vorzugsweise die Lichtmaschine, mit der rekuperierten Energie betrieben wird.

Diese Varianten bieten den besonderen Vorzug, dass ein herkömmlicher Verbrennungsmotor in Kombination mit dem elektromotorisch unterstützen Abgasturbolader als Microhybridanordnung fungiert, da rückgewonnene Abgasenergie in elektrische Energie gewandelt und ohne Zwischenspeicherung und ohne Hochvoltsystem direkt einer bestehende elektrischen Maschine eines verbrennungsmotorischen Antriebsstrangs zugeführt und zur Leistungssteigerung und zur Verbrauchsreduzierung der Brennkraftmaschine genutzt werden kann.

Ferner kann das Verfahren so ausgeführt sein, dass der Abgasturbolader im zweiten Betriebsmodus die Lichtmaschine oder den Kurbelwellenstartergenerator beim Laden des elektrischen Energiespeichers unterstützt, vorzugsweise falls ein Ladezustand des elektrischen Energiespeichers unter einen vorbestimmten Schwellenwert gefallen ist. So kann beispielsweise bei einer entladenen Starterbatterie die vom Abgasturbolader rekuperierte Energie direkt der Starterbatterie zugeführt werden.

Ferner kann das Verfahren so ausgeführt sein, dass in transienten Betriebszuständen der Brennkraftmaschine der Abgasturbolader im ersten Betriebsmodus, d. h. elektromotorisch unterstützt, betrieben wird, wobei die Energie für den elektromotorischen Betrieb des Abgasturboladers diesem ausschließlich aus dem Niederspannungsbordnetz des Fahrzeugs zugeführt wird, beispielsweise von der Starterbatterie des Fahrzeugs. Transiente Betriebszustände sind nicht-stationäre Betriebszustände, beispielsweise ein Anfahrvorgang oder ein Schaltvorgang, in denen die der Turbine des Abgasturboladers zugeführte Abgasenergie/- menge stark schwankt. Der Elektromotor des Abgasturboladers kompensiert in diesen transienten Betriebszuständen somit durch einen motorischen Betrieb ("Boost"-Betrieb) die Schwankungen in der Abgasenergie/-menge mit elektrischer Energie aus dem Niederspannungsbordnetz.

Im Teillastbetrieb und/oder Schubbetrieb kann die elektrische Maschine des Abgasturboladers auslegungsabhängig, z. B. in Abhängigkeit von weiteren Betriebsparametern wie dem Ladedruck, wahlweise als Motor oder Generator betrieben werden. Da in diesen Betriebszuständen nicht genügend rekuperierbare Abgasenergie zur Verfügung steht, ist das Verfahren so ausgeführt, dass die Fahrzeugbatterie ausschließlich durch die Lichtmaschine geladen wird.

Ein weiterer Aspekt der Erfindung betrifft eine Vorrichtung zum Betrieb eines elektromotorisch unterstützten Abgasturboladers eines Kraftfahrzeugs, insbesondere Nutzfahrzeugs. Die Vorrichtung umfasst einen Abgasturbolader mit einer Abgasturbine und einem Verdichter, die über eine Antriebswelle bewegungsgekoppelt sind. Der Abgasturbolader ist elektromotorisch unterstützt und weist hierzu eine motorisch und generatorisch betreibbare erste elektrische Maschine auf, die drehmomentübertragend mit der Antriebswelle des Abgasturboladers koppelbar bzw. gekoppelt und zum Antrieb bzw. zur Antriebsunterstützung des Abgasturboladers vorgesehen ist. Die Vorrichtung umfasst ferner ein Niederspannungsbordnetz, in dem eine motorisch und generatorisch betreibbare zweite elektrische Maschine, die drehmomentübertragend mit der Kurbelwelle koppelbar bzw. gekoppelt ist, und ein elektrischer Energiespeicher zur Versorgung der im Niederspannungsbordnetz angeordneten elektrischen Verbraucher vorgesehen sind. Ferner umfasst die Vorrichtung eine Steuereinrichtung, die eingerichtet ist, in einem ersten Betriebsmodus die erste elektrische Maschine des Abgasturboladers anzusteuern, um den Abgasturbolader elektromotorisch unterstützt anzutreiben, und in einem zweiten Betriebsmodus die erste elektrische Maschine anzusteuern, um elektrische Energie aus der Abgasenergie über einen generatorischen Betrieb zu rekuperieren. Die Vorrichtung kann ein rein verbrennungsmotorisch angetriebenes Nutzfahrzeug oder ein Nutzfahrzeug mit Mildhybridantrieb sein.

Gemäß allgemeinen Gesichtspunkten der Erfindung ist die Steuereinrichtung ferner eingerichtet, im ersten Betriebsmodus dem Abgasturbolader elektrische Energie aus dem Niederspannungsbordnetz des Kraftfahrzeugs zuzuführen und im zweiten Betriebsmodus die von dem Abgasturbolader rekuperierte elektrische Energie ohne vorherige Zwischenspeicherung in das Niederspannungsbordnetz einzuspeisen. Die Steuereinrichtung ist ferner eingerichtet, das Verfahren wie vorstehend offenbart durchzuführen. Zur Vermeidung von Wiederholungen sollen rein verfahrensgemäß offenbarte Merkmale auch als vorrichtungsgemäß offenbart gelten und beanspruchbar sein.

Ferner ist zu erwähnen, dass statt eines elektromotorischen Abgasturboladers als Abgasenergierückgewinnungseinrichtung auch ein elektrischer Turbocompound (ETC) verwendet werden kann, dessen rekuperierte elektrische Energie in analoger Weise dem Niederspannungsbordnutz zugeführt wird. Ein elektrischer Turbocompound (ETC) umfasst eine Abgasturbine gekoppelt mit einem Generator. Alternativ kann ferner ein sog. Waste Heat Recovery-System (WHR-System) zur Rekuperation verwendet werden. Ein WHR-System umfasst einen Wärmetauscher, in dem mittels der Hitze der Abgase Wasser oder eine andere Flüssigkeit verdampft wird. Dieser Dampf treibt dann eine Turbine an, die elektrischen Strom liefert.

Die zuvor beschriebenen bevorzugten Ausführungsformen und Merkmale der Erfindung sind beliebig miteinander kombinierbar. Weitere Einzelheiten und Vorteile der Erfindung werden im Folgenden unter Bezug auf die beigefügten Zeichnungen beschrieben. Es zeigen:
- Figur 1: ein schematisches Blockschaltbild einer Vorrichtung zum Betrieb eines elektromotorisch unterstützten Abgasturboladers gemäß einer Ausführungsform der Erfindung;
- Figur 2: ein Ablaufdiagramm des Verfahrens zum Betrieb eines elektromotorisch unterstützten Abgasturboladers gemäß einer Ausführungsform der Erfindung; und
- Figur 3: ein Motorbetriebskennfeld zur Illustration eines Volllast- und Hochlastbetriebszustandes.

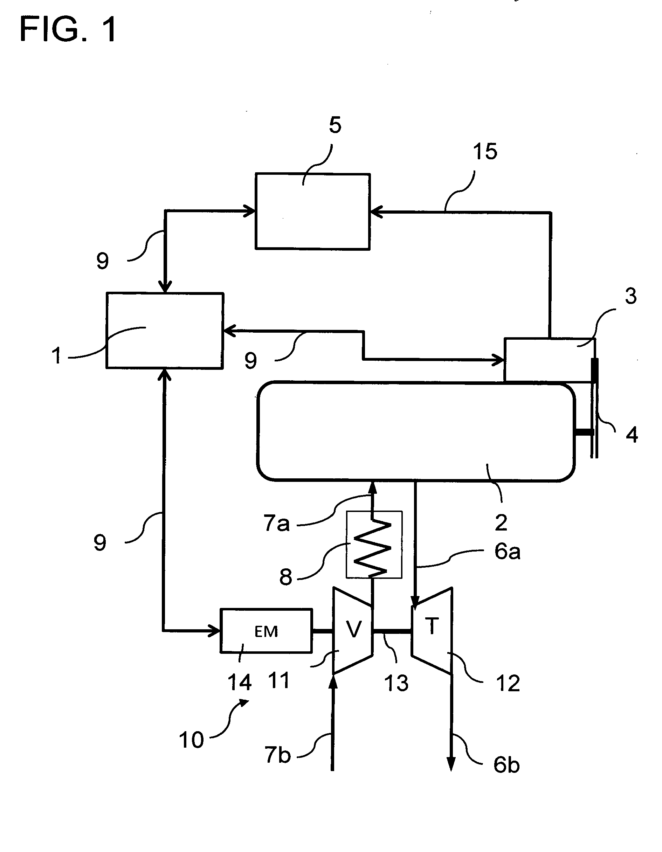

In Figur 1 ist in Form eines Blockschaltbildes eine Vorrichtung zum Betrieb eines elektromotorisch unterstützten Abgasturboladers gemäß einer Ausführungsform der Erfindung gezeigt. Dabei sind nur diejenigen Komponenten dargestellt, die für das Verständnis der Erfindung notwendig sind. Die Vorrichtung umfasst eine aufgeladene Brennkraftmaschine 2 und einen ihr zugeordneten elektromotorisch unterstützten Abgasturbolader (ATL) 10. Der elektromotorisch unterstützte Abgasturbolader 10 umfasst eine Turbine 12, die von einem Abgas der Brennkraftmaschine 2, das der Turbine über die Abgasleitung 6a zugeführt wird, angetrieben wird. Danach strömt das Abgasgemisch über den Turbinenauslass 6b in den Auspuff hinaus. Die Turbine 12 ist durch eine Welle 13 mit einem Verdichter 11 verbunden. Dem Verdichter wird über den Verdichtereinlass 7b Frischluft zugeführt. Der Verdichter 11 verdichtet die der Brennkraftmaschine 2 zuzuführende Ladeluft und steigert somit die Leistung der Brennkraftmaschine 2. Die durch den Verdichter 11 verdichtete Ladeluft wird über eine Ladeluftleitung 7a einem Ladeluftkühler 8 zugeführt und anschließend in die Brennkraftmaschine 2 eingespeist.

Der ATL 10 ist als elektromotorisch unterstützter Abgasturbolader ausgeführt. Der ATL 10 ist hierzu mit einer motorisch und generatorisch betreibbaren elektrischen Maschine 14 versehen, die drehmomentübertragend mit der Antriebswelle 13 koppelbar bzw. gekoppelt ist und zum Antrieb bzw. zur Antriebsunterstützung der anderen Komponenten 11 bis 13 des Abgasturboladers vorgesehen ist.

Der motorische und generatorische Betrieb des Elektromotors 14 wird von einer Steuereinrichtung 1 gesteuert. Die Steuereinrichtung 1 ist ferner eingerichtet, den Betrieb einer im 24V-Niederspannungsbordnetz des Fahrzeugs angeordneten Lichtmaschine 3 zu steuern. Die Lichtmaschine 3 ist drehmomentübertragend mit der Kurbelwelle koppelbar bzw. gekoppelt, vorliegend beispielsweise über einen Riementrieb 4. Die Steuereinrichtung 1 ist insbesondere eingerichtet, die Lichtmaschine 3 wahlweise motorisch oder generatorisch zu betreiben, wobei die Lichtmaschine 3 im herkömmlichen generatorischen Betrieb von der Brennkraftmaschine 2 angetrieben wird. Der erzeugte Strom kann hierbei einer im Niederspannungsbordnetz angeordneten Starterbatterie 5 zugeführt werden, was durch die elektrische Leitung 15 dargestellt ist. Weitere elektrische Verbraucher im Niederspannungsbordnetz (jeweils nicht dargestellt) können in an sich bekannter Weise von der Lichtmaschine 3 und der Starterbatterie 5 elektrisch versorgt werden. Der im generatorischen Betrieb erzeugte Strom kann ferner über die Steuereinrichtung 1 der elektrischen Maschine 14 des ATLs 10 zugeführt werden, um diesen motorisch zu betreiben, was durch die elektrischen Leitungen 9 illlustriert ist.

Eine Besonderheit der erfindungsgemäßen Lehre liegt darin, dass die Lichtmaschine 3 von der Steuereinrichtung 1 auch motorisch betrieben werden kann. In diesem Betriebsmodus wird der Lichtmaschine 3 elektrische Energie, die von der elektrischen Maschine 14 des ATLs 10 erzeugt wird, wenn dieser im Rekuperationsbetrieb betrieben wird, zugeführt. Je nach Betriebsmodus des ATLs 10, d. h. generatorisch oder motorisch, ändert sich die Richtung des Energietransfers zwischen Lichtmaschine 3 und der elektrischen Maschine 14 des ATLs 10, was durch die Doppelpfeile 9 dargestellt ist.

Die Steuereinrichtung 1 ist ferner eingerichtet, bei Bedarf auch bidirektional Energie zwischen der elektrischen Maschine 14 des ATLs 10 und der Starterbatterie 5 zu transferieren, beispielsweise um bei einer entladenen Starterbatterie 5 die Lichtmaschine 3 bei deren Ladevorgang zu unterstützen.

Die zur Ansteuerung der elektrischen Maschine 14 des ATLs 10 programmtechnisch und/oder mittels einer Steuerelektronik eingerichtete Steuereinrichtung 1 umfasst für den elektrischen Energietransfer vom ATL 10 ins Niederspannungsbordnetz und vom Niederspannungsbordnetz zum ATL 10 eine Leistungselektronik, welche über die vorgenannten elektrischen Verbindungsleitungen 9 mit der elektrischen Maschine 14 des ATLs 10, der Lichtmaschine 3 und der Starterbatterie 5 verbunden ist.

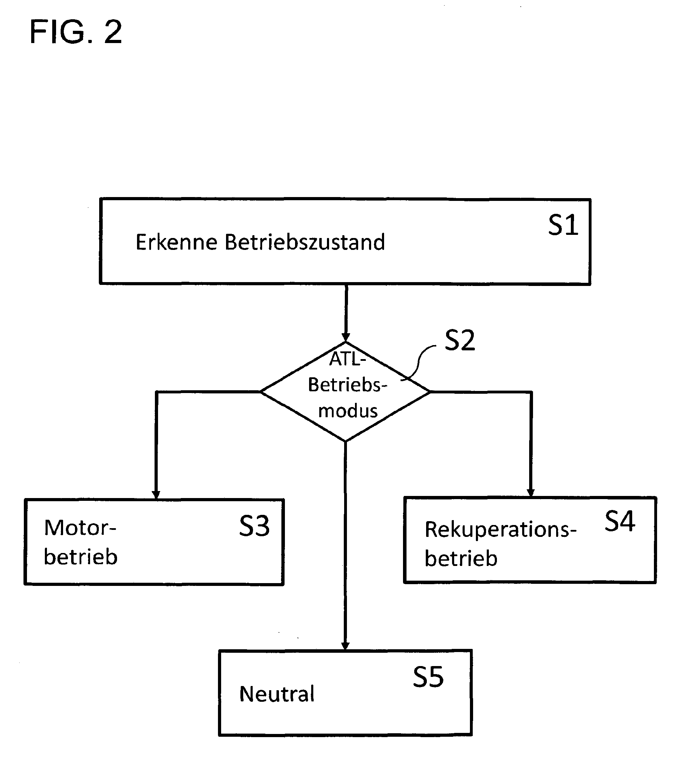

Figur 2 zeigt ein Ablaufdiagramm des Verfahrens zum Betrieb des ATLs 10 gemäß einer Ausführungsform der Erfindung. In Schritt S1 ermittelt die Steuereinrichtung 1 fortlaufend den aktuellen Betriebszustand des Fahrzeugs. Ein aktueller Betriebszustand kann beispielsweise anhand der aktuellen Drehzahl der Brennkraftmaschine 2, eines aktuell angeforderten Motormoments und/oder eines aktuellen Ladedrucks ermittelt werden.

In Abhängigkeit von dem ermittelten Betriebszustand wird in Schritt S2 von der Steuereinrichtung entschieden, in welchem Betriebsmodus die elektrische Maschine 14 des ATLs 10 betrieben wird.

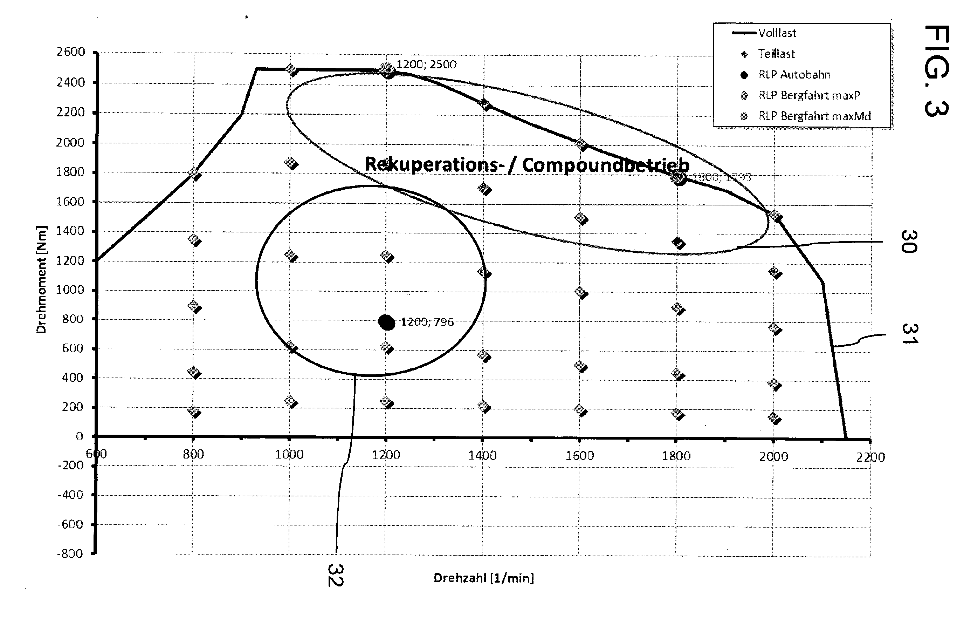

Befindet sich das Fahrzeug in einem Volllast- oder Hochlastbetrieb, dann steuert die Steuereinrichtung 1 in Schritt S4 die elektrische Maschine 14 so an, dass diese generatorisch und der ATL 10 im Rekuperationsbetrieb betrieben wird. Betriebszustände in einem Volllast- oder Hochlastbetrieb sind beispielsweise diejenigen Betriebspunkte, die in Figur 3 von der mit dem Bezugszeichen 30 gekennzeichneten Linie eingekreist sind. Figur 3 zeigt hierbei ein Motorbetriebskennfeld, das den Motorbetriebszustand in Form des aktuellen Drehmoments in Abhängigkeit von der Motordrehzahl angibt. Die durchgezogene Linie 31 gibt hierbei die Begrenzungskurve bei Volllast an, d. h. das bei Volllast maximal mögliche Drehmoment der Brennkraftmaschine 2 bei gegebener Motordrehzahl der Brennkraftmaschine 2. Ferner ist in Figur 3 ein zeitlich häufig auftretender Hauptfahrbereich durch die Kreislinie 32 markiert. Auch hier kann es auslegungs- und betriebsabhängig möglich sein - wenn auch mit geringerer Leistung im Vergleich zur Volllast - zu rekuperieren. Generelles Auslegungsziel ist die möglichst weite Ausdehnung der Rekuperationsbereiche im Motorbetriebskennfeld. Die Teillastrekuperation kann auch, unter Berücksichtigung der Motorparameter, durch Steller am Motor (Abgasrückführung, VariableTurbinengeometrie, WasteGate) erzwungen werden.

Wie vorstehend bereits erwähnt wurde, wird die vom ATL 10 rekuperierte Energie direkt ohne Zwischenspeicher über die Leistungselektronik der Steuereinrichtung dem Niederspannungsbordnetz zugeführt, beispielsweise um die Lichtmaschine 3 elektromotorisch zu betreiben, wodurch die Brennkraftmaschine 2 unterstützt werden kann.

Wird ein transienter Betriebszustand der Brennkraftmaschine 2 festgestellt, beispielsweise ein Start- oder Schaltvorgang, dann wird der Abgasturbolader elektromotorisch unterstützt betrieben (Schritt S3). Die Steuereinrichtung 1 stellt die hierfür notwendige elektrische Energie ausschließlich aus dem Niederspannungsbordnetz des Fahrzeugs zur Verfügung, beispielsweise von der Starterbatterie 5 oder der Lichtmaschine 3 des Fahrzeugs.

Im Teillastbetrieb und/oder Schubbetrieb kann die elektrische Maschine 14 des Abgasturboladers 10 auslegungsabhängig wahlweise als Motor (Schritt S3), als Generator (Schritt S4) oder neutral, d. h. ohne zugeführte und ohne entnommene Energie, (Schritt S5) betrieben werden.

Falls in Schritt S2 ferner festgestellt wird, dass die Starterbatterie entladen ist oder deren Ladungszustand unter einen vorbestimmten Schwellenwert gefallen ist, führt die Steuereinrichtung 1 im Rekuperationsbetrieb die vom ATL 10 rekuperierte elektrische Energie direkt der Starterbatterie 5 zu, um die Lichtmaschine 3 beim Laden der Starterbatterie 5 zu unterstützen.

Die Erfindung ist nicht auf die vorstehend beschriebenen bevorzugten Ausführungsbeispiele beschränkt. Vielmehr ist eine Vielzahl von Varianten und Abwandlungen möglich, die ebenfalls von dem Erfindungsgedanken Gebrauch machen und deshalb in den Schutzbereich fallen. Insbesondere beansprucht die Erfindung auch Schutz für den Gegenstand und die Merkmale der Unteransprüche unabhängig von den in Bezug genommenen Ansprüchen.

### Bezugszeichenliste

- 1: Steuereinrichtung
- 2: Brennkraftmaschine
- 3: Lichtmaschine
- 4: Riementrieb
- 5: Starterbatterie
- 6a: Turbineneinlass
- 6b: Turbinenauslass
- 7a: Verdichterauslass bzw. Ladeluftleitung
- 7b: Verdichtereinlass
- 8: Ladeluftkühler
- 9: Elektrische Leitung
- 10: Abgasturbolader
- 11: Verdichter
- 12: Turbine
- 13: Antriebswelle
- 14: Elektrische Maschine
- 15: Elektrische Leitung
- 30: Hochlastbetrieb
- 31: Volllastbegrenzungskurve des Motorbetriebskennfelds
- 32: Hauptfahrbereich

## Patentansprüche

1. Verfahren zum Betrieb eines elektromotorisch unterstützten Abgasturboladers (10) eines Kraftfahrzeugs, insbesondere Nutzfahrzeugs, umfassend einen ersten Betriebsmodus (S3), in dem der Abgasturbolader (10) elektromotorisch unterstützt angetrieben wird, und einen zweiten Betriebsmodus (S4), in dem der Abgasturbolader (10) elektrische Energie aus der Abgasenergie rekuperiert,
**dadurch gekennzeichnet,**
**dass** im ersten Betriebsmodus (S3) dem Abgasturbolader (10) elektrische Energie aus einem Niederspannungsbordnetz des Kraftfahrzeugs zugeführt wird und dass im zweiten Betriebsmodus (S4) die von dem Abgasturbolader (10) rekuperierte elektrische Energie ohne vorherige Zwischenspeicherung in das Niederspannungsbordnetz eingespeist wird.

2. Verfahren nach Anspruch 1, **dadurch gekennzeichnet, dass** die von dem Abgasturbolader (10) rekuperierte elektrische Energie
(a) einem im Niederspannungsbordnetz vorhandenen elektrischen Energiespeicher (5), über den die elektrischen Verbraucher des Niederspannungsbordnetzes versorgbar sind, zugeführt wird, wobei der elektrische Energiespeicher vorzugsweise die Starterbatterie ist; und/oder
(b) einer im Niederspannungsbordnetz vorhandenen elektromotorisch und generatorisch betreibbaren elektrischen Maschine zugeführt wird, um diese elektromotorisch zu betreiben.

3. Verfahren nach Anspruch 2, **dadurch gekennzeichnet, dass** die elektromotorisch und generatorisch betreibbare elektrische Maschine eine Lichtmaschine (3) oder ein Kurbelwellenstartergenerator ist.

4. Verfahren nach Anspruch 3, **dadurch gekennzeichnet, dass** in einem Volllast- oder Hochlastbetrieb (30) der Abgasturbolader (10) im zweiten Betriebsmodus (S4) betrieben wird und die elektrische Maschine, vorzugsweise die Lichtmaschine (3), mit der rekuperierten Energie betrieben wird.

5. Verfahren nach einem der Ansprüche 3 oder 4, **dadurch gekennzeichnet, dass** der Abgasturbolader (10) im zweiten Betriebsmodus (S4) die Lichtmaschine (3) oder den Kurbelwellenstartergenerator beim Laden des elektrischen Energiespeichers (5) unterstützt, falls ein Ladezustand des elektrischen Energiespeichers (5) unter einen vorbestimmten Schwellenwert gefallen ist.

6. Verfahren nach einem der vorhergehenden Ansprüche, **dadurch gekennzeichnet, dass** in transienten Betriebszuständen der Abgasturbolader (10) elektromotorisch unterstützt in dem ersten Betriebsmodus (S3) betrieben wird, wobei die Energie für den elektromotorischen Betrieb des Abgasturboladers (10) diesem ausschließlich aus dem Niederspannungsbordnetz des Fahrzeugs zugeführt wird.

7. Verfahren nach einem der vorhergehenden Ansprüche, **dadurch gekennzeichnet, dass** das Kraftfahrzeug ein Mildhybridfahrzeug oder ein verbrennungsmotorisch angetriebenes Kraftfahrzeug ohne Hybridantrieb ist.

8. Vorrichtung zum Betrieb eines elektromotorisch unterstützten Abgasturboladers (10) eines Kraftfahrzeugs, insbesondere Nutzfahrzeugs, umfassend
einen Abgasturbolader (10) mit einer Abgasturbine (12) und einem Verdichter (11), die über eine Antriebswelle (13) bewegungsgekoppelt sind, und einer motorisch und generatorisch betreibbaren ersten elektrischen Maschine (14), die zum Antrieb bzw. zur Antriebsunterstützung des Abgasturboladers (12, 12, 13) vorgesehen ist;
ein Niederspannungsbordnetz, in dem eine motorisch und generatorisch betreibbare zweite elektrische Maschine (3), die drehmomentübertragend mit der Kurbelwelle koppelbar bzw. gekoppelt ist, und ein elektrischer Energiespeicher (5) zur Versorgung der im Niederspannungsbordnetz angeordneten elektrischen Verbraucher vorgesehen sind; und
eine Steuereinrichtung (1), die eingerichtet ist, in einem ersten Betriebsmodus (S3) die erste elektrische Maschine (14) des Abgasturboladers (10) anzusteuern, um den Abgasturbolader (10) elektromotorisch unterstützt anzutreiben, und in einem zweiten Betriebsmodus (S4) die erste elektrische Maschine (14) anzusteuern, um elektrische Energie aus der Abgasenergie über einen generatorischen Betrieb zu rekuperieren;
**dadurch gekennzeichnet,**
**dass** die Steuereinrichtung (1) eingerichtet ist, im ersten Betriebsmodus (S3) dem Abgasturbolader (10) elektrische Energie aus dem Niederspannungsbordnetz des Kraftfahrzeugs zuzuführen und im zweiten Betriebsmodus die von dem Abgasturbolader (10) rekuperierte elektrische Energie ohne vorherige Zwischenspeicherung in das Niederspannungsbordnetz einzuspeisen.

9. Vorrichtung nach Anspruch 8, **dadurch gekennzeichnet, dass** die erste elektrische Maschine (14) drehmomentübertragend mit der Antriebswelle (13) koppelbar bzw. gekoppelt ist oder die Antriebswelle (13) gleich der Welle der ersten elektrischen Maschine ist.

10. Vorrichtung nach Anspruch 8 oder 9, **dadurch gekennzeichnet, dass** die Steuereinrichtung (1) eingerichtet ist, das Verfahren gemäß einem der Ansprüche 2 bis 8 durchzuführen.
